# EUROPEAN PATENT SPECIFICATION

(11) **EP 4 166 764 B1**
(45) Date of publication and mention of the grant of the patent: **23.10.2024**
(21) Application number: 21846784.3
(22) Date of filing: 20.07.2021
(51) Int. Cl.: F01K 23/10, F02C 3/34

(54) **GAS TURBINE PLANT**
GASTURBINENANLAGE
CENTRALE TURBINE À GAZ

(30) Priority: 20.07.2020 JP 2020123749
(43) Date of publication of application: 19.04.2023
(73) Proprietor: Mitsubishi Heavy Industries, Ltd., Tokyo 100-8332 (JP)
(72) Inventor: UECHI Hideyuki, Tokyo 100-8332 (JP); SONODA Takashi, Tokyo 100-8332 (JP); TSUJII Kazunori, Yokohama-shi, Kanagawa 220-8401 (JP); NAGAFUCHI Naoyuki, Yokohama-shi, Kanagawa 220-8401 (JP)
(74) Representative: Henkel & Partner mbB
(86) International application number: PCT/JP2021/027085
(87) International publication number: WO 2022/019295

(56) References cited:
- JP-A- 2007 170 307
- JP-A- 2013 029 305
- US-A1- 2011 302 922
- US-A1- 2012 137 698
- US-A1- 2014 290 264

## Description

### Technical Field

The present invention relates to a gas turbine plant.

### Background Art

In a power plant using fossil fuels, for example, a gas turbine plant, exhaust gas is generated as a gas turbine operates. The exhaust gas contains carbon dioxide. From the viewpoint of environmental protection, a technique for removing the carbon dioxide from exhaust gas as much as possible is required. As such a technique, for example, a method described in PTL 1 below is known. In the method according to PTL 1, the carbon dioxide is adsorbed and removed by absorption liquid by bringing at least a part of the exhaust gas into contact with the absorption liquid.

Incidentally, depending on an operating state of a plant, the exhaust gas may contain moisture (humidity). When such moisture is condensed, white smoke is generated when the exhaust gas is discharged. In addition to spoiling the surrounding landscape, since the exhaust gas is accompanied by nitrogen oxide remaining in a minute amount in the exhaust gas by direct dropping of the exhaust gas in the vicinity of a discharge port of the exhaust gas, white smoke is required to be suppressed. Therefore, in the technique according to PTL 1 below, a method is adopted in which a used absorption liquid is heated and regenerated by heat of the exhaust gas, and the exhaust gas is heated by utilizing the heat of the regenerated absorption liquid. As a result, it is said that the moisture in the exhaust gas evaporates, and generation of white smoke can be suppressed.

PTL 2 discloses a method for operating a gas turbine power plant with exhaust gas recirculation. In the method, a setpoint concentration of one component of the inlet gas and/or of the hot working gas and/or of the exhaust gas of the gas turbine is determined in a first step, in accordance with the operating conditions of the gas turbine, from a combination of a setpoint value of a control loop, a feedforward control signal and a correction value. In a second step, the position of a control element is adjusted in accordance with the setpoint/actual deviation in the concentration of the component.

PTL 3 discloses a cogeneration plant that includes a gas turbine, a heat recovery steam generator, a steam turbine and a cooler/condenser. A division module is provided at a division point, via which downstream the heat recovery steam generator the combustion gas is cooled and dehumidified in the cooler/condenser and then divided into a first combustion gas flow and a second combustion gas flow. A second condenser is provided for receiving the second combustion gas flow to separate contained carbon dioxide from contained water by condensation of the water. The cogeneration plant further includes a heater and a compressor for receiving the first combustion gas flow, which is heated, compressed and partly extracted to by-pass the combustor for cooling of the gas turbine before it enters the combustor and mix with the flow of oxygen and fuel to be burned in the gas turbine.

PTL 4 discloses a method for operating a combined cycle power plant including a CO₂ capture system and flue gas recirculation system. The method includes controlling a flue gas recirculation rate and a re-cooling temperature of the recirculated flue gases, depending on load, to optimize the overall plant efficiency including the CO₂ capture system.

### Citation List

### Patent Literature

[PTL 1] Japanese Unexamined Patent Application Publication No. 2009-247932
[PTL 2] US 2014/290264 A1
[PTL 3] US 2012/137698 A1
[PTL 4] US 2011/302922 A1

### Summary of Invention

### Technical Problem

However, since the heat of the regenerated absorption liquid is limited, there is a possibility that the exhaust gas cannot be sufficiently heated only by using the absorption liquid. In addition, in order to facilitate recovery of CO2 in the exhaust gas, there is a technique for increasing the concentration of CO₂ in the exhaust gas by recirculating the exhaust gas to the intake air. In this case, since the concentration of moisture in the exhaust gas also increases at the same time, there is a high possibility that white smoke may be generated when the exhaust gas is not sufficiently heated. Therefore, there is still a possibility that white smoke may occur in a device described in patent document 1.

The present invention has been made to solve the above problems, and an object thereof is to provide a gas turbine plant capable of further suppressing generation of white smoke.

### Solution to Problem

In order to solve the above problems, there is provided a gas turbine plant as set out in independent claim 1. Advantageous developments are defined in the dependent claims.

### Advantageous Effects of Invention

According to the gas turbine plant of the present invention, generation of white smoke can be further suppressed.

### Brief Description of Drawings

Fig. 1 is a diagram illustrating a configuration of a gas turbine plant according to a first embodiment of the present invention.
Fig. 2 is a diagram illustrating a configuration of a gas turbine plant according to a second embodiment of the present invention.

### Description of Embodiments

### <First Embodiment>

### (Configuration of Gas Turbine Plant)

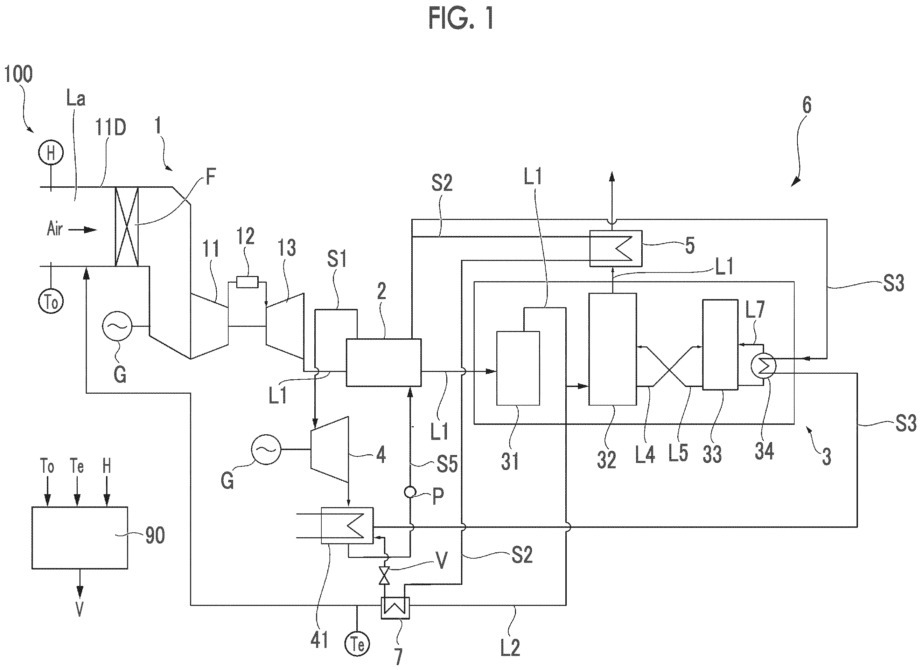

Hereinafter, a gas turbine plant 100 according to a first embodiment of the present invention will be described with reference to Fig. 1. As illustrated in Fig. 1, the gas turbine plant 100 is provided with a gas turbine 1, a heat recovery steam generator 2, a steam turbine 4, exhaust gas treatment equipment 6, an EGR line L2, an EGR heater 7, and a control device 90.

### (Configuration of Gas Turbine)

The gas turbine 1 includes a compressor 11, a combustor 12, and a turbine 13. The compressor 11 compresses outside air guided through an intake line La to generate high-pressure air. An outside air temperature measurement part To that measures the temperature of the outside air and an outside air humidity measurement part H that measures the humidity of the outside air are provided on the intake line La. In addition, on the intake side of the compressor 11, an air intake duct 11D and a filter F disposed in the air intake duct 11D are provided.

The combustor 12 generates high-temperature and high-pressure combustion gas by mixing fuel with the high-pressure air generated by compressor 11 and combusting the fuel. The turbine 13 is driven by the combustion gas. Rotational energy of the turbine 13 is taken out from a shaft end and utilized for driving, for example, a generator G. The exhaust gas discharged from the turbine 13 is recovered by an exhaust line L1 and sent to the heat recovery steam generator 2.

### (Configuration of Heat Recovery Steam Generator)

The heat recovery steam generator 2 generates superheated steam by exchanging heat between the exhaust gas circulating in the exhaust line L1 and water. The superheated steam is sent to the steam turbine 4 through a first line S1 and used to drive the steam turbine 4. The rotational energy of the steam turbine 4 is utilized, for example, to drive the generator G. The steam discharged from the steam turbine 4 is recovered by a condenser 41. In the condenser 41, the steam is condensed by exchanging heat with a medium introduced from the outside to generate water. The water generated in the condenser 41 is supplied to the heat recovery steam generator 2 through the fifth line S5.

The exhaust gas treatment equipment 6 is provided on the exhaust line L1 and on the downstream side of the heat recovery steam generator 2. The exhaust gas treatment equipment 6 is provided to keep the exhaust gas circulating in the exhaust line L1 in a clean state and diffuse the exhaust gas to the outside air. The exhaust gas treatment equipment 6 includes a carbon dioxide recovery device 3 and an exhaust gas heater 5.

### (Configuration of Carbon Dioxide Recovery Device)

The carbon dioxide recovery device 3 is a device for recovering and removing carbon dioxide contained in the exhaust gas. The carbon dioxide recovery device 3 includes a quencher 31, an absorber 32, and a regenerator 33.

The quencher 31 is a facility for cooling the exhaust gas circulating through the exhaust line L1 prior to the recovery of the carbon dioxide in the absorber 32 described later. In a case where the temperature of the exhaust gas circulating through the exhaust line L1 is approximately 90°C, the quencher 31 cools the exhaust gas to approximately 30°C. The exhaust gas cooled by the quencher 31 is sent to the absorber 32 through the exhaust line L1.

The absorber 32 has a cylindrical shape extending in the vertical direction, and the exhaust line L1 extending from the quencher 31 is connected to a lower part thereof. An absorption liquid capable of chemically bonding with the carbon dioxide flows from above to below inside the absorber 32. Specifically, as such an absorption liquid, an aqueous solution of an amine containing monoethanolamine (MEA), diethanolamine (DEA), triethanolamine (TEA), diisopropanolamine (DIPA), and methyldiethanolamine (MDEA), an organic solvent containing no water, a mixture thereof, and an amino acid-based aqueous solution are preferably used. In addition, other than amine may be used as the absorption liquid.

The exhaust gas flowed into the lower part of the inside of the absorber 32 rises in the absorber 32 while coming into contact with the absorption liquid flowing from above. At this time, the carbon dioxide contained in the exhaust gas is chemically absorbed by the absorption liquid. The residual exhaust gas from which the carbon dioxide is removed flows into the exhaust line L1 again from the upper part of the absorber 32.

The absorption liquid from which the carbon dioxide is absorbed is sent to the regenerator 33 through an absorption liquid recovery line L4 connected to the lower part of the absorber 32. The regenerator 33 is a device for regenerating the absorption liquid (separating carbon dioxide) in a state where the carbon dioxide is absorbed. A third line S3 through which steam taken out from the heat recovery steam generator 2 described above flows is connected to the regenerator 33. A reboiler 34 is provided on the third line S3. Steam from the heat recovery steam generator 2 is supplied to the reboiler 34 through the third line S3. In the reboiler 34, a part of the water contained in the absorption liquid is heated by the heat exchange with the steam to be stripping steam. The stripping steam is sent into the regenerator 33 through an absorption liquid extraction line L7. In the regenerator 33, the stripping steam comes into contact with the absorption liquid before regeneration supplied from the absorption liquid recovery line L4. As a result, the carbon dioxide is diffused from the absorption liquid before regeneration, and the absorption liquid is regenerated (state not containing carbon dioxide). Carbon dioxide diffused from the absorption liquid before regeneration is sent from the regenerator 33 to a carbon dioxide compressor (not illustrated). In addition, the steam discharged from the reboiler 34 is sent to the above-described condenser 41 through the third line S3.

A part of the absorption liquid after regeneration (that is, component that is not stripping steam) is sent to an absorption liquid supply line L5 connected to a lower part of the regenerator 33. A heat exchanger, a pump, and a cooler (not illustrated) are provided on the absorption liquid supply line L5. By driving the pump, the absorption liquid after regeneration is supplied from the regenerator 33 to the heat exchanger. As a result, heat exchange is performed between the absorption liquid before regeneration and the absorption liquid after regeneration. Furthermore, in a cooler, the absorption liquid after regeneration is appropriately cooled to a temperature suitable for absorbing the carbon dioxide. The absorption liquid after regeneration at a low temperature is supplied to the upper part of the absorber 32.

### (Configuration of Exhaust Gas Heater)

The exhaust gas heater 5 heats the exhaust gas in order to suppress whitening of the exhaust gas discharged from the carbon dioxide recovery device 3 through the exhaust line L1. The exhaust gas heater 5 is a heat exchanger. Steam (200°C to 230°C as an example) extracted through a second line S2 branching off from the above third line S3 circulates through the exhaust gas heater 5 as a heat medium. That is, the exhaust gas heater 5 uses the steam extracted from the heat recovery steam generator 2 as a heat medium. The fact that "steam extracted from the heat recovery steam generator 2" includes at least one of steam directly extracted from the heat recovery steam generator 2 and steam extracted from the heat recovery steam generator 2 after being used to drive the steam turbine 4. As a result, heat exchange occurs between the exhaust gas and steam circulating through the exhaust line L1, and the temperature of the exhaust gas rises. At this time, at least a part of the moisture (humidity) contained in the exhaust gas evaporates. The steam as a heat medium passed through the exhaust gas heater 5 is sent to an EGR heater 7 described later through the second line S2 as a heat medium. The heat medium may be in liquid phase (water) or gas phase (steam).

The EGR line L2 extracts at least a part of the exhaust gas passed through the quencher 31 of the carbon dioxide recovery device 3 and guides the exhaust gas to the intake side of the gas turbine 1 (compressor 11). More specifically, one end of the EGR line L2 is provided on the upstream side (that is, side that contacts the outside air) of the filter F in the air intake duct 11D described above. An EGR heater 7 and an exhaust gas temperature measurement part Te are provided in order from the quencher 31 side toward the gas turbine 1 side on the EGR line L2. The EGR heater 7 is a heat exchanger. In the EGR heater 7, heat exchange is performed between the heat medium guided from the exhaust gas heater 5 through the above second line S2 and the exhaust gas. As a result, the exhaust gas passed through the EGR heater 7 is heated. As an example, in a case where the temperature of the exhaust gas supplied from the quencher 31 is approximately 30°C, the temperature of the exhaust gas after passing through the EGR heater 7 is preferably approximately 40°C.

The heat medium passed through the EGR heater 7 is guided to the condenser 41 through the second line S2. A valve device V (supplying flow regulating section) is provided between the EGR heater 7 and the condenser 41 on the second line S2. By changing the opening degree of the valve device V, the flow rate of the heat medium circulating through the second line S2 is changed. That is, the valve device V is a flow regulation valve. The degree of opening of the valve device V is determined and regulated by the control device 90 based on the humidity of the exhaust gas measured by the temperature of the exhaust gas measured by the exhaust gas temperature measurement part Te, the temperature of the outside air measured by the outside air temperature measurement part To, and the humidity of the outside air measured by the outside air humidity measurement part H.

### (Action Effect)

According to the above configuration, the exhaust gas passed through the absorber 32 is heated by the exhaust gas heater 5. As a result, the humidity contained in the exhaust gas evaporates, so that it is possible to further reduce the possibility of white smoke when the exhaust gas is diffused to the outside. Furthermore, in the above configuration, a part of the exhaust gas discharged from the quencher 31 is guided (recirculated) to the intake side of the gas turbine 1 through the EGR line L2. At this time, when the exhaust gas contains humidity, the moisture adheres to the filter F provided in the air intake duct 11D of the compressor 11, and there is a possibility that intake resistance increases. In addition, as such moisture becomes water droplets and collides with the rotor blade of the compressor 11, so that there is a possibility that erosion may be generated. Furthermore, the EGR line L2 concentrates not only CO2 but also moisture, which tends to increase the possibility of white smoke being generated. In the above configuration, the EGR heater 7 heats the exhaust gas circulating through the EGR line L2. As a result, the humidity of the exhaust gas is reduced, so that adhesion of moisture to the filter F is suppressed. As a result, an increase in intake resistance can be suppressed.

According to the above configuration, the amount of heat medium supplied to the EGR heater 7 is regulated based on the temperature of the exhaust gas circulating through the EGR line L2. As a result, the amount of heating of the exhaust gas by the EGR heater 7 can be changed. For example, in a case where the temperature of the exhaust gas supplied to the gas turbine 1 is too high, by reducing the opening degree of the valve device V as the supplying flow regulating section, the amount of the heat medium can be reduced, and the temperature can be changed in the direction of lowering. As a result, the amount of heat medium used is reduced and the efficiency of the plant can be improved. Conversely, in a case where the temperature of the exhaust gas is too low, the temperature can be changed in the direction of increasing by increasing the amount of the heat medium. As a result, the temperature of the exhaust gas supplied to the gas turbine 1 is optimized, and the mixed gas of the outside air and the exhaust gas is not saturated with humidity.

According to the above configuration, the amount of heat medium supplied to the EGR heater 7 is regulated based on the temperature of the outside air supplied to the gas turbine 1, in addition to the temperature of the exhaust gas circulating through the EGR line L2. For example, in a case where the temperature of the outside air is low, the amount of the heat medium is increased by increasing the opening degree of the valve device V as the supplying flow regulating section, and the temperature of the exhaust gas is increased. As a result, the temperature of the exhaust gas supplied to the gas turbine 1 is optimized so that the temperature of the mixed gas of the outside air and the exhaust gas exceeds the dew point and it cannot be saturated with humidity.

According to the above configuration, the amount of heat medium supplied to the EGR heater 7 is regulated based on the humidity of the outside air, in addition to the temperature of the exhaust gas circulating through the EGR line L2 and the temperature of the outside air. For example, in a case where the humidity of the outside air is excessively high, the temperature of the exhaust gas is raised by increasing the amount of heat medium supplied to the EGR heater 7. On the other hand, in a case where the humidity of the outside air is excessively low, the temperature of the exhaust gas is lowered by reducing the amount of heat medium supplied to the EGR heater 7. As a result, the temperature and humidity of the exhaust gas supplied to the gas turbine 1 are optimized, and the mixed gas of the outside air and the exhaust gas is not saturated with humidity.

Hereinbefore, the first embodiment of the present invention is described. In the above-described first embodiment, the example in which the exhaust gas temperature measurement part Te and the outside air humidity measurement part H are provided on the EGR line and the outside air temperature measurement part To is provided on the intake line La is described. However, it is also possible to adopt a configuration in which the outside air temperature measurement part To is not provided or a configuration in which the outside air humidity measurement part H is not provided. In other words, it is possible to adopt a configuration that includes only the exhaust gas temperature measurement part Te.

### <Second Embodiment>

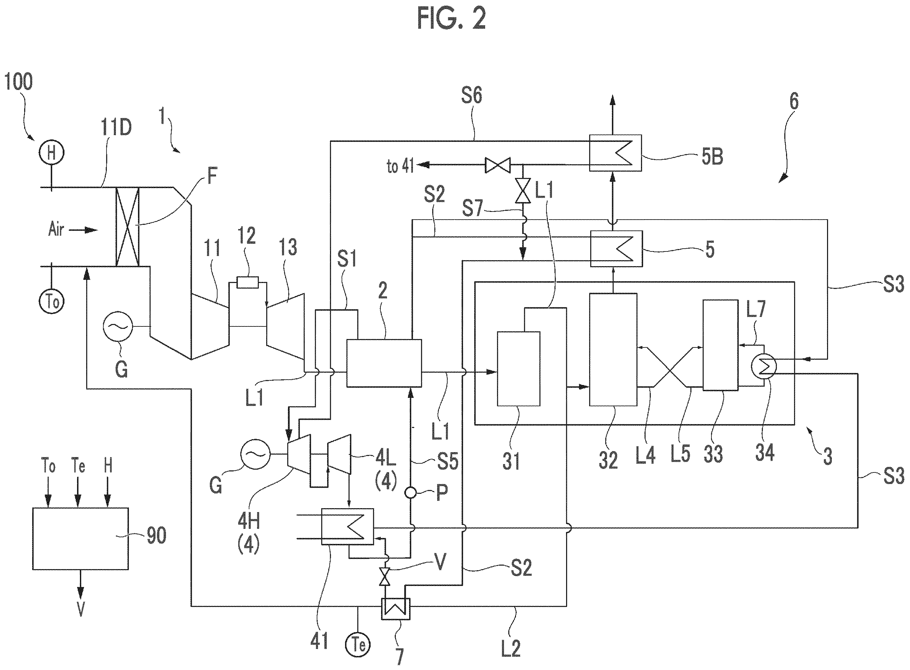

Next, a second embodiment of the present invention will be described with reference to Fig. 2. The same components as those in the first embodiment are designated by the same reference numerals, and detailed description thereof will be omitted. In the present embodiment, the configuration of the steam turbine 4 is different from that of the first embodiment. In addition, in the present embodiment, in addition to the exhaust gas heater 5 described in the first embodiment, an auxiliary exhaust gas heater 5B is further provided.

The steam turbine 4 includes a high-pressure steam turbine 4H and a low-pressure steam turbine 4L. The low-pressure steam turbine 4L and the high-pressure steam turbine 4H may be coaxially connected to each other or may be independent of each other. The high-pressure steam turbine 4H is driven by steam guided from the heat recovery steam generator 2 through the first line S1. The steam passed through the high-pressure steam turbine 4H is guided to the low-pressure steam turbine 4L to drive the low-pressure steam turbine 4L. Steam passed through the low-pressure steam turbine 4L is sent to the condenser 41.

A sixth line S6 is connected to an intermediate stage of the high-pressure steam turbine 4H. High-temperature steam (250°C to 350°C as an example) extracted through the sixth line S6 is sent to the auxiliary exhaust gas heater 5B described later as a heat medium. It is possible to adopt a configuration in which the steam turbine 4 has only one turbine. In this case, the sixth line S6 is preferably connected to the high-pressure side stage of the steam turbine 4.

The auxiliary exhaust gas heater 5B is provided downstream of the exhaust gas heater 5 in the exhaust line L1. The auxiliary exhaust gas heater 5B is a heat exchanger that exchanges heat between the steam extracted from the high-pressure steam turbine 4H and the exhaust gas circulating through the exhaust line L1.

In addition, in the present embodiment, the steam as a heat medium passed through the auxiliary exhaust gas heater 5B can be guided to the second line S2 through an auxiliary line S7.

According to the above configuration, the exhaust gas passed through the exhaust gas heater 5 is further heated by the auxiliary exhaust gas heater 5B. As a result, the humidity contained in the exhaust gas is further reduced, and the possibility of white smoke formation can be further reduced.

Hereinbefore, the second embodiment of the present invention is described.

For example, as a modification example common to each embodiment, it is possible to adopt a configuration in which only steam extracted from the steam turbine 4 is supplied to the EGR heater 7 as a heat medium. In addition, it is also possible to use only the steam extracted from the heat recovery steam generator 2 as the heat medium for the EGR heater 7. Furthermore, the steam extracted from the steam turbine 4 and the steam extracted from the heat recovery steam generator 2 can be used together. In this manner, three types of aspects are considered as the heat medium for the EGR heater 7.

In addition, the exhaust gas heater 5 can use only the steam extracted from the steam turbine 4 as a heat medium. Furthermore, it is also possible to use only the heat recovery steam generator 2 as the heat medium for the exhaust gas heater 5 as in the above embodiment. The steam extracted from the heat recovery steam generator 2 and the steam extracted from the steam turbine 4 can be used together as a heat medium for the exhaust gas heater 5. In this manner, three types of aspects are considered as the heat medium for the exhaust gas heater 5. In other words, a total of nine types of configurations are considered as a combination with the heat medium of the EGR heater 7 described above. A suitable configuration can be appropriately selected from these nine types of combinations according to the design and specifications.

### Industrial Applicability

The present disclosure relates to a gas turbine plant. According to the present disclosure, generation of white smoke can be further suppressed. Reference Signs List

100: gas turbine plant
1: gas turbine
2: heat recovery steam generator
3: carbon dioxide recovery device
4: steam turbine
4H: high-pressure steam turbine
4L: low-pressure steam turbine
5: exhaust gas heater
5B: auxiliary exhaust gas heater
6: exhaust gas treatment equipment
7: EGR heater
11: compressor
11D: air intake duct
12: combustor
13: turbine
31: quencher
32: absorber
33: regenerator
34: reboiler
90: control device
F: filter
G: generator
H: outside air humidity measurement part
P: water supply pump
Te: exhaust gas temperature measurement part
To: outside air temperature measurement part
L1: exhaust line
L2: EGR line
L4: absorption liquid recovery line
L5: absorption liquid supply line
L6: cooling line
L7: absorption liquid extraction line
S1: first line
S2: second line
S3: third line
S4: fourth line
S5: fifth line
S6: sixth line
V: valve device (supplying flow regulating section)

## Claims

1. A gas turbine plant (100) comprising:
a gas turbine (1);
a heat recovery steam generator (2) that generates steam by exchanging heat between an exhaust gas of the gas turbine (1) and water;
a quencher (31) that cools the exhaust gas discharged from the heat recovery steam generator (2);
an absorber (32) that recovers carbon dioxide contained in the exhaust gas cooled by the quencher (31);
an EGR line (L2) that extracts a part of the exhaust gas and guides the exhaust gas to an intake side of the gas turbine (1);
an exhaust gas heater (5) that heats the exhaust gas by exchanging heat between a heat medium and the exhaust gas passed through the absorber (32) using steam extracted from the heat recovery steam generator (2) as the heat medium; and
an EGR heater (7) that is provided on the EGR line (L2) and heats the exhaust gas circulating through the EGR line (L2) by exchanging heat between the exhaust gas circulating through the EGR line (L2) and the heat medium discharged from the exhaust gas heater (5), wherein
the EGR line (L2) extracts a part of the exhaust gas discharged from the quencher (31) and guides the exhaust gas to the intake side of the gas turbine (1).

2. The gas turbine plant (100) according to claim 1, further comprising:
an exhaust gas temperature measurement part (Te) that is provided on the EGR line (L2) on the intake side of the gas turbine (1) from the EGR heater (7) and measures a temperature of the exhaust gas circulating through the EGR line (L2); and
a supplying flow regulating section (V) that regulates an amount of the heat medium supplied to the EGR heater (7) based on the temperature of the exhaust gas.

3. The gas turbine plant (100) according to claim 2, further comprising:
an outside air temperature measurement part (To) that measures a temperature of outside air supplied to the gas turbine (1), wherein
the supplying flow regulating section (V) regulates the amount of the heat medium supplied to the EGR heater (7) based on the temperature of the exhaust gas and the temperature of the outside air.

4. The gas turbine plant (100) according to claim 2 or 3, further comprising:
an outside air humidity measurement part (H) that measures a humidity of outside air sucked by the gas turbine (1), wherein
the supplying flow regulating section (V) regulates the amount of the heat medium supplied to the EGR heater (7) based on the temperature of the exhaust gas, a temperature of the outside air, and the humidity of the outside air.

5. The gas turbine plant (100) according to any one of claims 1 to 4, further comprising:
a steam turbine (4) driven by steam generated by the heat recovery steam generator (2); and
an auxiliary exhaust gas heater (5B) that heats the exhaust gas by exchanging heat between steam extracted from the steam turbine (4) and the exhaust gas passed through the absorber (32).

6. The gas turbine plant (100) according to claim 5, wherein
the steam turbine (4) includes
a high-pressure steam turbine (4H), and
a low-pressure steam turbine (4L) driven by steam discharged from the high-pressure steam turbine (4H), and
the auxiliary exhaust gas heater (5B) is provided downstream of the exhaust gas heater (5) in a flow direction of the exhaust gas, and further heats the exhaust gas by exchanging heat between the steam extracted from the high-pressure steam turbine (4H) and the exhaust gas passed through the exhaust gas heater (5).

## Patentansprüche

1. Eine Gas-Turbinen-Anlage (100), umfassend:
eine Gasturbine (1);
einen Wärmerückgewinnungsdampferzeuger (2), der durch Wärmetausch zwischen einem Abgas der Gasturbine (1) und Wasser Dampf erzeugt;
einen Quencher (31), der das vom Wärmerückgewinnungsdampferzeuger (2) ausgetragene Abgas kühlt;
einen Absorber (32), der Kohlendioxid zurückgewinnt, das in dem vom Quencher (31) gekühlten Abgas enthalten ist;
eine EGR-Leitung (L2), die einen Teil des Abgases austrägt und das Abgas zu einer Ansaugseite der Gasturbine (1) leitet;
einen Abgasheizer (5), der das Abgas durch Wärmeaustausch zwischen einem Heizmedium und dem durch den Absorber (32) ausgeströmten Abgas erwärmt, wobei er als Heizmedium den aus dem Wärmerückgewinnungsdampferzeuger (2) entnommenen Dampf verwendet; und
eine EGR-Heizung (7), die an der EGR-Leitung (L2) vorgesehen ist und das durch die EGR-Leitung (L2) zirkulierende Abgas durch Wärmeaustausch zwischen dem durch die EGR-Leitung (L2) zirkulierenden Abgas und dem von der Abgasheizung (5) ausgetragenen Heizmedium erwärmt, wobei
die EGR-Leitung (L2) einen Teil des aus dem Quencher (31) austretenden Abgases extrahiert und das Abgas zur Ansaugseite der Gasturbine (1) leitet.

2. Die Gas-Turbinen-Anlage (100) gemäß Anspruch 1, ferner umfassend:
ein Abgastemperaturmessteil (Te), das an der EGR-Leitung (L2) auf der Einlassseite der Gasturbine (1) von der EGR-Heizung (7) vorgesehen ist und eine Temperatur des durch die EGR-Leitung (L2) zirkulierenden Abgases misst; und
einen Abschnitt (V) zum Regulieren des Zufuhrstroms, der basierend auf der Temperatur des Abgases eine Menge des der EGR-Heizung (7) zugeführten Heizmediums reguliert.

3. Die Gas-Turbinen-Anlage (100) gemäß Anspruch 2, ferner umfassend
einen Außenlufttemperaturmessteil (To), der eine Temperatur der der Gasturbine (1) zugeführten Außenluft misst, wobei
der Abschnitt (V) zum Regulieren des Zufuhrstroms die Menge des der EGR-Heizung (7) zugeführten Heizmediums basierend auf der Temperatur des Abgases und der Temperatur der Außenluft reguliert.

4. Die Gas-Turbinen-Anlage (100) gemäß Anspruch 2 oder 3, ferner umfassend
einen Außenluftfeuchtemessteil (H), der eine Feuchtigkeit der von der Gasturbine (1) angesaugten Außenluft misst, wobei
der Abschnitt (V) zum Regulieren des Zufuhrstroms die Menge des der EGR-Heizung (7) zugeführten Heizmediums basierend auf der Temperatur des Abgases, einer Temperatur der Außenluft und der Feuchtigkeit der Außenluft reguliert.

5. Die Gas-Turbinen-Anlage (100) gemäß einem der Ansprüche 1 bis 4, ferner umfassend
eine Dampfturbine (4), die durch den vom Wärmerückgewinnungsdampferzeuger (2) erzeugten Dampf angetrieben wird; und
einen Abgaszusatzerhitzer (5B), der das Abgas durch Wärmetausch zwischen dem von der Dampfturbine (4) extrahierten Dampf und dem durch den Absorber (32) geströmten Abgas erwärmt.

6. Die Gas-Turbinen-Anlage (100) gemäß Anspruch 5, wobei
die Dampfturbine (4) umfasst
eine Hochdruckdampfturbine (4H), und
eine Niederdruckdampfturbine (4L), die durch den von der Hochdruckdampfturbine (4H) ausgetragenen Dampf angetrieben wird, und
der Abgaszusatzerhitzer (5B) stromabwärts von dem Abgaserhitzer (5) in einer Strömungsrichtung des Abgases vorgesehen ist und ferner das Abgas durch Wärmeaustausch zwischen dem von der Hochdruckdampfturbine (4H) ausgetragenen Dampf und dem durch den Abgaserhitzer (5) hindurchgeleiteten Abgas erwärmt.

## Revendications

1. Centrale (100) à turbine à gaz comprenant :
une turbine (1) à gaz ;
un générateur (2) de vapeur à récupération de la chaleur, qui produit de la vapeur en échangeant de la chaleur entre un gaz d'échappement de la turbine (1) à gaz et de l'eau ;
un refroidisseur (31), qui refroidit le gaz d'échappement évacué du générateur (2) de vapeur à récupération de la chaleur ;
un absorbeur (32), qui récupère du dioxyde de carbone contenu dans le gaz d'échappement refroidi par le refroidisseur (31) ;
une ligne (L2) EGR, qui extrait une partie du gaz d'échappement et conduit le gaz d'échappement à un côté d'admission de la turbine (1) à gaz ;
un dispositif (5) de chauffage du gaz d'échappement, qui chauffe le gaz d'échappement en échangeant de la chaleur entre un milieu de chaleur et le gaz d'échappement, qui est passé dans l'absorbeur (32), en utilisant de la vapeur extraite du générateur (2) de vapeur à récupération de la chaleur comme milieu de chaleur ; et
un dispositif (7) de chauffage EGR, qui est prévu sur la ligne (L2) EGR et qui chauffe le gaz d'échappement circulant dans la ligne (L2) EGR en échangeant de la chaleur entre le gaz d'échappement circulant dans la ligne (L2) EGR et le milieu de chaleur évacué du dispositif (5) de chauffage de gaz d'échappement, dans laquelle
la ligne (L2) EGR extrait une partie du gaz d'échappement évacué du refroidisseur (31) et conduit le gaz d'échappement au côté d'admission de la turbine (1) à gaz.

2. Centrale (100) à turbine à gaz suivant la revendication 1, comprenant en outre :
une partie (Te) de mesure de la température du gaz d'échappement, qui est prévue sur la ligne (L2) EGR du côté d'admission de la turbine (1) à gaz à partir du dispositif (7) de chauffage EGR et mesure une température du gaz d'échappement circulant dans la ligne (L2) EGR ; et
une partie (V) de régulation d'un écoulement d'alimentation, qui régule une quantité du milieu de chaleur envoyée au dispositif (7) de chauffage EGR sur la base de la température du gaz d'échappement.

3. Centrale (100) à turbine à gaz suivant la revendication 2, comprenant en outre :
une partie (To) de mesure de la température de l'air à l'extérieur, qui mesure une température de l'air à l'extérieur envoyée à la turbine (1) à gaz, dans laquelle
la partie (V) de régulation d'un écoulement d'alimentation régule la quantité du milieu de chaleur envoyée au dispositif (7) de chauffage EGR sur la base de la température du gaz d'échappement et de la température de l'air à l'extérieur.

4. Centrale (100) à turbine à gaz suivant la revendication 2 ou 3, comprenant en outre :
une partie (H) de mesure de l'humidité de l'air à l'extérieur, qui mesure une humidité de l'air à l'extérieur aspiré par la turbine (1) à gaz, dans laquelle
la partie (V) de régulation d'un écoulement d'alimentation régule la quantité de milieu de chaleur envoyée au dispositif (7) de chauffage EGR, sur la base de la température du gaz d'échappement d'une température de l'air à l'extérieur et de l'humidité de l'air à l'extérieur.

5. Centrale (100) à turbine à gaz suivant l'une quelconque des revendications 1 à 4, comprenant en outre :
une turbine (4) à vapeur entraînée par de la vapeur produite par le générateur (2) de vapeur à récupération de la chaleur ; et
un dispositif (5B) auxiliaire de chauffage du gaz d'échappement, qui chauffe le gaz d'échappement en échangeant de la chaleur entre de la vapeur extraite de la turbine (4) à vapeur et le gaz d'échappement, qui est passé dans l'absorbeur (32) .

6. Centrale (100) à turbine à gaz suivant la revendication 5, dans laquelle
la turbine (4) à vapeur comprend
une turbine (4H) à vapeur haute pression, et
une turbine (4L) à vapeur basse pression entraînée par de la vapeur évacuée de la turbine (4H) à vapeur haute pression, et
le dispositif (5B) auxiliaire de chauffage du gaz d'échappement est prévu en aval du dispositif (5) de chauffage du gaz d'échappement, dans le sens d'écoulement du gaz d'échappement et chauffe en outre le gaz d'échappement en échangeant de la chaleur entre la vapeur extraite de la turbine (4H) à vapeur haute pression et le gaz d'échappement, qui est passé dans le dispositif (5) de chauffage du gaz d'échappement.
